# EUROPÄISCHE PATENTSCHRIFT

(11) **EP 4 640 353 B1**
(45) Veröffentlichungstag und Bekanntmachung des Hinweises auf die Patenterteilung: **09.12.2026**
(21) Anmeldenummer: 25172580.0
(22) Anmeldetag: 25.04.2025
(51) Int. Cl.: B23D 79/02, B23B 51/10

(54) **DREHANTREIBBARES ENTGRATWERKZEUG ZUM ENTGRATEN PARALLEL VERLAUFENDER KANTEN AN EINER OBER- UND UNTERSEITE EINES PLATTENFÖRMIGEN WERKSTÜCKS**
ROTATIONALLY DRIVABLE DEBURRING TOOL FOR DEBURRING PARALLEL EDGES ON AN UPPER AND LOWER SIDE OF A PLATE-SHAPED WORKPIECE
OUTIL D'ÉBAVURAGE ROTATIF POUR ÉBAVURER DES BORDS PARALLÈLES SUR LA FACE SUPÉRIEURE ET LA FACE INFÉRIEURE D'UNE PIÈCE EN FORME DE PLAQUE

(30) Priorität: 25.04.2024 EP 24172409
(43) Veröffentlichungstag der Anmeldung: 29.10.2025
(73) Patentinhaber: Gühring KG, 72458 Albstadt (DE)
(72) Erfinder: von Puttkamer, Ingo, 72458 Albstadt (DE)
(74) Vertreter: Winter, Brandl - Partnerschaft mbB

(56) Entgegenhaltungen:
- EP-A1- 0 072 374
- EP-A1- 1 987 921
- EP-A2- 0 161 346
- DE-A1- 102017 126 919
- US-A- 5 938 379

## Beschreibung

Die Erfindung betrifft ein drehantreibbares Entgratwerkzeug zum Entgraten parallel verlaufender Kanten an einer Ober- und Unterseite eines plattenförmigen Werkstücks.

Zum Entgraten von Werkstückkanten werden unter anderem sogenannte Oberfräsen oder Kantenfräsen eingesetzt. Derartige Fräsen sind regelmäßig handgehaltene Werkzeugmaschinen mit einem in einem Spannfutter eingespannten Fräswerkzeug. Zum Entgraten, Formen oder Glätten einer Werkstückkante wird die Fräse entlang der zu bearbeitenden Werkstückkante geführt. Zu diesem Zweck kann am Fräswerkzeug eine drehbeweglich gelagerte Anschlagrolle vorgesehen sein, über die die Fräse an einer an die Werkstückkante angrenzenden Seitenfläche anschlägt. Sollen parallel verlaufende Kanten an einer Ober- und Unterseite eines plattenförmigen Werkstücks entgratet werden, sind die beiden Kanten jedoch voneinander getrennt zu bearbeiten.

Aus der EP 1 987 921 A1 ist ein Entgratwerkzeug zum gleichzeitigen Entgraten parallel verlaufender Kanten an zwei Vorsprüngen eines Werkstücks offenbart. Das Entgratwerkzeug weist zu diesem Zweck zwei Bürsten auf, die in einem axialen Abstand zueinander fest auf einem drehangetriebenen Schaft sitzen. Jede Bürste besteht aus einem auf dem Schaft sitzenden Halter und einer Vielzahl von gekrümmten Faserbündeln, die von einer Umfangsfläche des jeweiligen Halters aus radial abstehen. Die Faserbündel sind jeweils so ausgerichtet, dass sie in Richtung des jeweils anderen Halters gekrümmt sind und die Faserbündel des jeweils anderen Halters kreuzen. Der axiale Abstand der beiden Bürsten ist an den in Richtung der Werkzeugachse gemessenen axialen Abstand der Vorsprünge bzw. der Vorsprungskanten angepasst, so dass die einander zugewandten Kanten der beiden Vorsprünge gleichzeitig entgratet werden können. Allerdings lassen sich mit dem in der EP 1 987 921 A1 vorgeschlagenen Entgratwerkzeug keine voneinander abgewandten Kanten an einer Ober- und Unterseite eines Vorsprungs oder eines plattenförmigen Werkstücks bearbeiten.

Es ist daher die Aufgabe der Erfindung, ein Entgratwerkzeug zu schaffen, mit dem sich parallel verlaufende Kanten an einer Ober- und Unterseite eines plattenförmigen Werkstücks gleichzeitig bearbeiten lassen.

Diese Aufgabe wird durch ein drehantreibbares Entgratwerkzeug mit den Merkmalen des Anspruchs 1 gelöst. Vorteilhafte Ausgestaltungen sind Gegenstand abhängiger Ansprüche.

Ein erfindungsgemäßes Entgratwerkzeug weist einen sich entlang einer Drehachse erstreckenden Schaft sowie einen Entgratkopf mit zwei koaxial, in einem axialen Abstand zueinander axial- und drehfest auf dem Schaft sitzenden Haltebuchsen auf, die jeweils wenigstens einen Entgratfaden halten. Die Entgratfäden können jeweils monofil (einfaserig) oder multifil (mehrfaserig bzw. als ein Faserbündel) ausgeführt sein. Der axiale Abstand der Haltebuchsen zueinander ist vorzugsweise einstellbar, um den Entgratkopf an den Abstand der zu bearbeitenden parallel verlaufenden Kanten, d.h. an die Dicke des die Kanten enthaltenden Werkstückteils, anpassen zu können. Zur Abstandseinstellung kann wenigstens eine, vorzugsweise jede, der beiden Haltebuchsen längs des Schafts verschiebbar ausgeführt sein.

Jede Haltebuchse hält wenigstens einen Entgratfaden, vorzugsweise eine Vielzahl von um die Drehachse gleich oder ungleich verteilten Entgratfäden. Jeder Entgratfaden ist diesbezüglich an seinem einen Endabschnitt an der jeweiligen Haltebuchse befestigt, beispielsweise eingespannt, eingeklemmt oder eingeklebt, und ragt mit seinem anderen Längenendabschnitt frei in Richtung der axial gegenüberliegenden Haltebuchse. Jeder Entgratfaden ist damit einseitig an einer jeweiligen Haltebuchse befestigt. Der in Richtung der axial gegenüberliegenden Haltebuchse ragende Längenendabschnitt ist dagegen nicht befestigt, d.h. drehzahl-adaptiv. Die im Zustand eines Drehantriebs auf die drehzahl-adaptiven Längenendabschnitte ausgeübten Fliehkräfte bewirken eine Auslenkung der Längenendabschnitte vom Schaft weg nach radial außen.

Die Längenendabschnitte der Entgratfäden kragen jeweils von einer axialen Stirnseite der jeweiligen Haltebuchse aus in Richtung der axial gegenüberliegenden Haltebuchse. Die Längenendabschnitte der Entgratfäden ragen daher aufeinander zu.

Die Entgratfäden, insbesondere deren drehzahl-adaptiven Längenendabschnitte, können so ausgeführt sein, dass sie sich im Ruhezustand, d.h. im Zustand ohne einen Drehantrieb, des Entgratwerkzeugs linear entlang des Schafts in Richtung der axial gegenüberliegenden Haltebuchse erstrecken und erst bei in einem Drehantriebszustand nach radial außen ausgelenkt werden. Das nicht drehende Entgratwerkzeug zeichnet sich daher durch eine schlanke Konfiguration aus.

Alternativ dazu können die Entgratfäden aber auch so ausgeführt sein, dass sie sich bereits im Ruhezustand mit einer vorgegebenen Auswärtskrümmung in Richtung der axial gegenüberliegenden Haltebuchse erstrecken. Im Vergleich zu sich linear erstreckenden Entgratfäden kann durch die vorgegebene Krümmung eine radiale Auslenkung der Entgratfäden schon bei niedrigen Drehzahlen erreicht werden.

Selbstverständlich kann jede Haltebuchse auch eine Kombination aus wenigstens einem linearen Entgratfaden und wenigstens einem gekrümmten Entgratfaden halten.

Zumindest die drehzahl-adaptiven Längenendabschnitte der Entgratfäden sind elastisch auslenkbar ausgeführt, wodurch sie bei einer Drehzahlreduzierung des Entgratwerkzeugs wieder in Richtung ihres Ausgangszustands zurückkehren.

Die radial auslenkbaren Entgratfäden ermöglichen eine gleichzeitige Entgratbearbeitung parallel verlaufender Kanten an einer Ober- und Unterseite eines plattenförmigen Werkstücks. Diesbezüglich ist das Entgratbearbeitung so zu positionieren, dass die axiale Mitte des Entgratkopfs, d.h. die axiale Mitte zwischen den beiden Haltebuchsen, mittig zwischen den beiden Werkstückkanten liegt und das Entgratwerkzeug entlang einer die beiden Werkstückkanten verbindenden Seitenfläche des Werkstücks oder umgekehrt das Werkstück relativ zum Entgratwerkzeug bewegt wird.

Die Länge der drehzahl-adaptiven Längenendabschnitte ist vorzugsweise größer als der halbe Abstand der beiden Haltebuchsen zueinander und vorzugsweise auch kleiner als der Abstand der beiden Haltebuchsen zueinander. Dadurch wird zum Einen eine axiale Überlappung der von den beiden Haltebuchsen aus aufeinander zu ragenden Entgratfäden erreicht bzw. zum Anderen verhindert, dass eine Auslenkung der Entgratfäden durch einen Kontakt der Entgratfäden mit der jeweils axial gegenüberliegenden Haltebuchse blockiert oder behindert wird. Im Drehantriebszustand können sich die nach radial außen ausgelenkten Entgratfäden der beiden Haltebuchsen, wenn man seitlich auf das Entgratwerkzeug blickt, mittig zwischen den beiden Haltebuchsen kreuzen. Der Kreuzungspunkt kann auf 20% bis 80%, vorzugsweise 40% bis 60%, der Länge der Längenendabschnitte liegen. Durch die beidseits des Kreuzungspunkts liegenden Teile der Längenendabschnitte der Entgratfäden können parallel verlaufende Kanten an der Ober- und Unterseite eines Werkstücks zuverlässig gleichzeitig entgratet werden.

Bezogen auf den zwischen den beiden Haltebuchsen, konkret den axial gegenüberliegenden Stirnseiten der Haltebuchsen, gemessenen Abstand kann die Länge der Längenendabschnitte 70% bis 90% des Abstands zwischen den axial gegenüberliegenden Haltebuchsen betragen. Dadurch kann eine ausreichende radiale Auslenkung der Längenendabschnitte sichergestellt werden. Des Weiteren können die parallel verlaufenden Kanten an der Ober- und Unterseite des Werkstücks, das während der Entgratung mittig zwischen den beiden Haltebuchsen liegt, von den beidseits des Kreuzungspunkt liegenden Teile der Längenendabschnitte erfasst und entgratet werden.

Das Entgratwerkzeug kann einen Radialanschlag für eine radiale Abstützung des Entgratwerkzeugs am Werkstück aufweisen. Durch den Radialanschlag wird ein konstanter radialer Abstand des Entgratwerkzeugs zum Werkstück gewährleistet, wenn das Entgratwerkzeug entlang einer zwischen den beiden Kanten an der Ober- und Unterseite liegenden Seitenfläche des Werkstücks bewegt wird. Dadurch wird ein gleichmäßiger Materialabtrag an und entlang beider Werkstückkanten ermöglicht.

Der Radialanschlag kann eine axial mittig zwischen den Haltebuchsen dreh- und axialfest am Schaft angeordnete Trägereinrichtung mit axialen Durchlässen, durch welche sich die Längenendabschnitte der Entgratfäden hindurch erstrecken, und eine an der Trägereinrichtung drehbeweglich getragene Anschlaghülse zur Abstützung am Werkstück aufweisen. Die relativ zur Trägereinrichtung drehbewegliche Anschlaghülse ermöglicht eine sanfte, ruckfreie Bewegung des Entgratwerkzeugs entlang der zwischen den beiden Kanten an der Ober- und Unterseite liegenden Seitenfläche des Werkstücks. Vorzugsweise ist zwischen der Trägereinrichtung und der Anschlaghülse ein Wälzlager angeordnet. In diesem Fall kann das Wälzlager einen von der Trägereinrichtung getragenen Innenring und einen über eine Wälzkörperanordnung die Anschlaghülse tragenden Außenring aufweisen. Die in der Trägereinrichtung vorgesehenen axialen Durchlässe bieten genügend Raum für eine erforderliche radiale Auslenkung der Entgratfäden im Drehantriebszustand des Entgratwerkzeugs. Die axialen Durchlässe in der Trägereinrichtung können zudem eine maximale Auslenkung der Entgratfäden begrenzen.

Die Trägereinrichtung kann nach dem Vorbild eines Speichenrads ein auf dem Schaft axial- und drehfest sitzendes Nabenteil und ein über radial verlaufende Speichen mit dem Nabenteil verbundenes Felgenteil aufweisen. Die zwischen den Speichen gebildeten axialen Durchlässe ermöglichen die Bereitstellung eines genügend großen seitlichen Spiels, um die erforderliche radiale Auslenkung der Entgratfäden zu gewährleisten. Alternativ zum Speichenrad kann der Träger auch nach dem Vorbild eines Scheibenrads mit axialen Durchlässen für die Entgratfäden ausgebildet sein.

Das Entgratwerkzeug kann des Weiteren eine Auslenkungsbegrenzungseinrichtung aufweisen, um eine maximale Auslenkung der drehzahl-adaptiven Längenendabschnitt der Entgratfäden zu begrenzen. Eine Begrenzung der Auslenkung kann einen übermäßigen Angriff an den und damit eine übermäßige Entgratung der beiden Werkstückkanten beispielsweise im Falle einer unbeabsichtigten Drehzahlerhöhung entgegenwirken.

Die Auslenkungsbegrenzungseinrichtung kann zwei Stützhülsen aufweisen, die jeweils einer der Haltebuchsen zugeordnet sind und die die Längenendabschnitte der von den Haltebuchsen auskragenden Entgratfäden mit einem definierten seitlichen Spiel aufnehmen. Die Stützhülsen können jeweils auf einer zugeordneten Haltebuchse sitzen und die Entgratfäden ringartig einfassen und dadurch deren maximale Auslenkung begrenzen. Die Stützhülsen können entlang bzw. relativ zur zugeordneten Stützhülse verschiebbar sein, um die maximale Auslenkung der Entgratfäden zu korrigieren. Die Stützhülsen können sich im Durchmesser in Richtung zur axial beabstandeten Haltebuchse trichterförmig erweitern, um den Entgratfäden Raum für eine Auslenkung radial nach außen zu geben.

Durch die trichterförmige Erweiterung kann verhindert werden, dass die radial ausgelenkten Entgratfäden am Ende der Stützhülsen zu stark geknickt werden.

Im Interesse einer einfachen und wirtschaftlichen Herstellung des Entgratwerkzeugs können die Längenendabschnitte aller Entgratfäden gleich lang sein. In diesem sind alle Entgratfäden gleich drehzahl-adaptiv, wodurch sich eine gleichmäßige Auslenkung und damit eine gleichmäßige Entgratleistung ergibt.

Des Weiteren halten die Haltebuchsen vorzugsweise gleich viele, beispielsweise zwei, Entgratfäden, die zur Geringhaltung von Unwuchten zudem vorzugsweise gleichmäßig beabstandet um die Werkzeugachse verteilt sind. Bei mittiger Ausrichtung des Werkstücks zwischen den beiden Haltebuchsen werden die parallel verlaufende Kanten an der Ober- und Unterseite daher gleich intensiv bearbeitet.

Bevorzugt sind die Entgratfäden aus Kunststofffasern, Glasfasern, Metallfasern, Keramikfasern und / oder Kohlenstoffasern gebildet. Des Weiteren können die Entgratfäden bzw. die Fasern der Entgratfäden eine, beispielsweise mit Diamantenmaterial besetzte, abrasive Faseroberfläche aufweisen. Die Besetzung mit dem Material führt zu einer harten Strukturierung, wodurch die entgratende Wirkung der Entgratfäden bei Kontakt mit dem Werkstück erhöht wird.

Im Folgenden werden bevorzugte Ausführungsformen eines Entgratwerkzeugs zum gleichzeitigen Entgraten parallel verlaufender Kanten an einer Ober- und Unterseite eines plattenförmigen Werkstücks anhand schematischer Zeichnungen vorgestellt.
Fig. 1 zeigt schematisch eine erste Ausführungsform eines Entgratwerkzeugs.
Fig. 2 zeigt schematisch eine zweite Ausführungsform eines Entgratwerkzeugs.
Fig. 3 zeigt schematisch eine dritte Ausführungsform eines Entgratwerkzeugs.

### Erste Ausführungsform

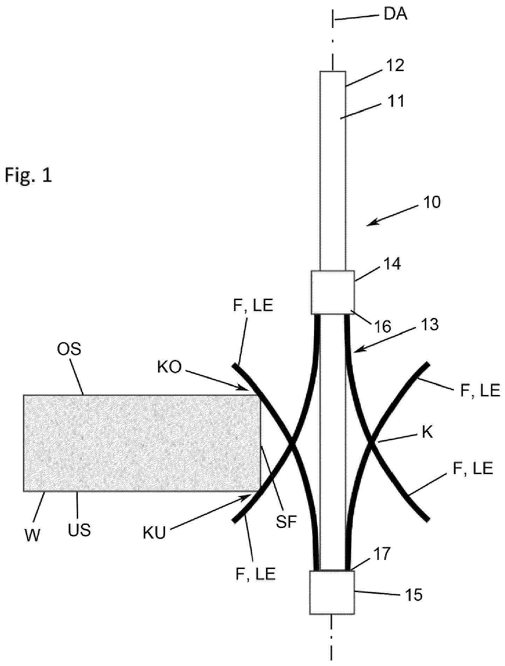

In Fig. 1 ist ein erfindungsgemäßes, um eine Drehachse DA drehangetriebenes Entgratwerkzeug 10 gemäß einer ersten Ausführungsform zum Entgraten parallel verlaufender Kanten KO, KU an einer Ober- und Unterseite OS, US eines Werkstücks W dargestellt.

Das Entgratwerkzeug 10 umfasst einen sich entlang der Drehachse DA erstreckenden Schaft 11, dessen in Fig. 1 oberes Ende einen in ein Spannfutter einer (nicht gezeigten) Werkzeugmaschine einzuspannenden Einspannabschnitt 12 bildet. Am unteren Ende trägt der Schaft 11 einen Entgratkopf 13. Der Entgratkopf 13 umfasst zwei koaxial und in einem axialen Abstand zueinander auf dem Schaft 11 axial- und drehfest sitzende Haltebuchsen 14, 15, die jeweils, in Fig. 1 zwei, Entgratfäden F halten. Es sei an dieser Stelle angemerkt, dass die Zahl der Entgratfäden F je Haltebuchse 14, 15 nicht auf zwei beschränkt ist. Die Haltebuchsen 14, 15 halten vorzugsweise jedoch gleich viele Entgratfäden F, die um die Drehachse A gleichmäßig verteilt angeordnet sind.

Der axiale Abstand der Haltebuchsen 14, 15 zueinander ist in hier nicht näher gezeigter Weise einstellbar. Beispielsweise sind die Haltebuchse 14, 15 auf dem Schaft lösbar, z.B. durch Verschraubung, festgeklemmt. Zur Abstandseinstellung kann wenigstens eine, vorzugsweise jede, der beiden Haltebuchsen 14, 15 längs des Schafts 11 verstellt werden.

Jeder Entgratfaden F ist an seinem einen Endabschnitt an der zugeordneten Haltebuchse 14, 15 befestigt, beispielsweise eingespannt, eingeklemmt oder eingeklebt, und ragt mit seinem anderen Längenendabschnitt LE in Richtung der axial beabstandeten (axial gegenüberliegenden) Haltebuchse 14, 15. Die Entgratfäden F sind also einseitig an der jeweils zugeordneten Haltebuchse 14, 15 befestigt. Die in Richtung der axial beabstandeten Haltebuchse 14, 15 ragenden Längenendabschnitte LE sind dagegen nicht befestigt, wodurch die bei einem Drehantrieb des Entgratwerkzeugs 10 auf die Längenendabschnitte LE ausgeübten Fliehkräfte eine Auslenkung der Längenendabschnitte LE vom Schaft 11 weg nach radial außen bewirken, wie es in Fig. 1 skizziert ist.

Die Entgratfäden F sind monofil oder multifil und bevorzugt aus Kunststofffasern, Glasfasern, Metallfasern, Keramikfasern und / oder Kohlenstoffasern gebildet. Sie können eine mit Diamantenmaterial besetzte abrasive Faseroberfläche aufweisen.

Wie Fig. 1 zeigt, kragen die Längenendabschnitte LE der Entgratfäden F jeweils von einer axialen Stirnseite 16, 17 der zugeordneten Haltebuchse 14, 15 aus. Die Längenendabschnitte LE der Entgratfäden F ragen daher von axial gegenüberliegenden Stirnseiten 16, 17 der Haltebuchsen 14, 15 ausgehend aufeinander zu.

Fig. 1 zeigt, dass sich die Längenendabschnitte LE der Entgratfäden F durch die Fliehkraft nach außen krümmen, wodurch sich der in axialer Richtung gemessene Abstand zwischen den Enden der aufeinander zu ragenden Längenabschnitte LE der Entgratfäden F mit zunehmender Drehzahl und Auswärtskrümmung verringert.

Die Entgratfäden F können so ausgeführt sein, dass sie sich im Ruhezustand, d.h. im Zustand ohne Drehantrieb des Entgratwerkzeugs 10, linear entlang des Schafts 11 in Richtung der axial beabstandeten Haltebuchse 14, 15 erstrecken. Alternativ dazu können die Entgratfäden F aber auch so ausgeführt sein, dass sie sich bereits im Ruhezustand mit einer vorgegebenen Auswärtskrümmung in Richtung der axial beabstandeten Haltebuchse 14, 15 erstrecken.

Es versteht sich, dass zumindest die drehzahl-adaptiven Längenendabschnitte LE der Entgratfäden F elastisch auslenkbar ausgeführt sind und bei einer Reduzierung der Drehzahl bzw. im Stillstand des Entgratwerkzeugs wieder in ihren Ruhezustand zurückkehren.

Die Längenendabschnitte LE aller Entgratfäden F sind gleich lang. Die Länge der Längenendabschnitte LE beträgt 70% bis 90% des Abstands zwischen den axial gegenüberliegenden Haltebuchsen 14, 15. Die Länge der Längenendabschnitte LE der Entgratfäden F ist damit größer als der halbe Abstand der beiden Haltebuchsen 14, 15 zueinander.

Bei einem Drehantrieb des Entgratwerkzeugs 10 wird dadurch die in Fig. 1 gezeigte axiale Überlappung bzw. Kreuzung der Entgratfäden 14, 15 erreicht. In dem in Fig. 1 gezeigten Zustand kreuzen sich die nach außen ausgelegten Entgratfäden F mittig zwischen den beiden Haltebuchsen 14, 15, wobei der Kreuzungspunkt auf 40% bis 60% der Länge der Längenendabschnitte LE der Entgratfäden F liegt.

Die bei einem Drehantrieb radial ausgelenkten Längenendabschnitte LE der Entgratfäden F ermöglichen eine gleichzeitige Entgratbearbeitung der Werkstückkanten KO, KU an der Ober- und Unterseite OS, US des Werkstücks W, indem das Entgratwerkzeug 10 entlang der die beiden parallel verlaufenden Kanten verbindenden Seitenfläche SF des mittig zwischen den Haltebuchsen 14, 15 positionierten Werkstücks W geführt wird, wie es in Fig. 1 skizziert ist.

### Zweite Ausführungsform

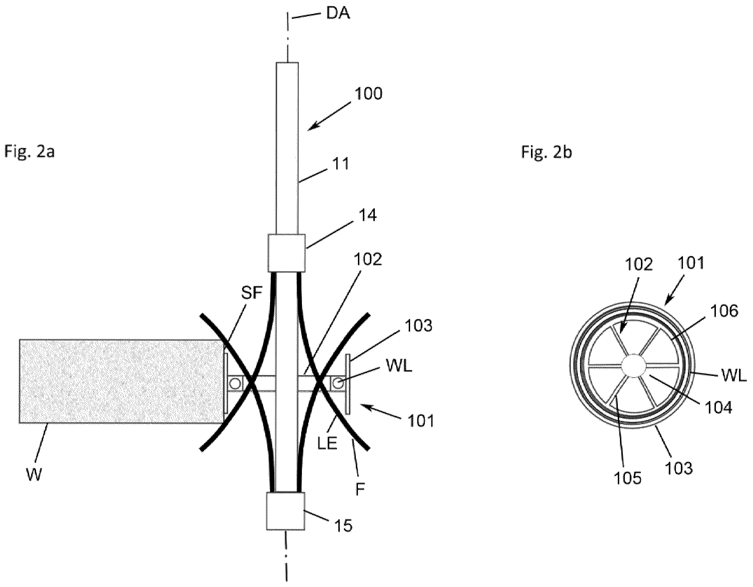

In Fig. 2a ist ein erfindungsgemäßes drehantreibbares Entgratwerkzeug 100 gemäß einer zweiten Ausführungsform zum Entgraten parallel verlaufender Kanten an einer Ober- und Unterseite eines Werkstücks W dargestellt.

Die zweite Ausführungsform unterscheidet sich von der ersten Ausführungsform dadurch, dass das Entgratwerkzeug 100 zusätzlich einen Radialanschlag 101 aufweist, der das Entgratwerkzeug 100 am Werkstück W oder umgekehrt das Werkstück W am Entgratwerkzeug 10 in Bezug auf die Drehachse radial abgestützt. Der Radialanschlag 101 kann zudem eine maximale radiale Auslenkung der drehzahl-adaptiven Längenendabschnitte LE der Entgratfäden F begrenzt.

In der in Fig. 2a gezeigten Ausführungsform weist der Radialanschlag 101 eine axial mittig zwischen den Haltebuchsen 14, 15 dreh- und axialfest am Schaft 11 gehaltene Trägereinrichtung 102 und eine an der Trägereinrichtung 102 drehbeweglich getragene Anschlaghülse 103 zur Anlage am Werkstück W auf. Der Radialanschlag 101 stützt und führt daher das Entgratwerkzeug 100, wenn es entlang einer zwischen den beiden parallel verlaufenden Kanten liegenden Seitenfläche SF des Werkstücks W bewegt wird.

Die Trägereinrichtung 102 weist ein am Schaft 11 dreh- und axialfest angeordnetes Nabenteil 104 und ein über Speichen 105 mit dem Nabenteil 104 verbundenes Felgenteil 106 auf. Am Felgenteil 106 ist die Anschlaghülse 103 zur Anlage und zum Abrollen am Werkstück W drehbeweglich angeordnet. Diesbezüglich ist zwischen dem Felgenteil 106 und der Anschlaghülse 103 ein Wälzlager WL mit einem vom Felgenteil 106 getragenen Innenring und einem über eine Wälzkörperanordnung die Anschlaghülse 103 tragenden Außenring angeordnet, wie es in Fig. 2b skizziert ist. Die zwischen den Speichen 105 gebildeten axialen Durchlässe bieten genügend Raum für die erforderliche radiale Auslenkung der Längenendabschnitte LE der Entgratfäden F. Alternativ dazu kann die Trägereinrichtung 102 auch nach dem Vorbild eines (nicht gezeigten) Scheibenrads mit axialen Durchlässen für die Entgratfäden ausgebildet sein.

### Dritte Ausführungsform

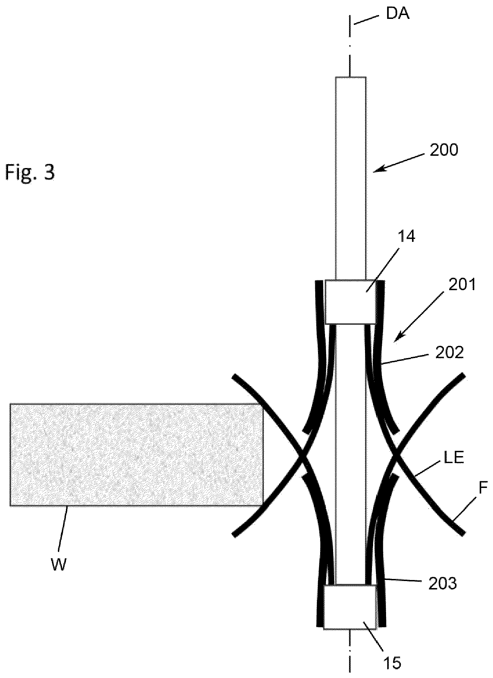

In Fig. 3 ist ein erfindungsgemäßes drehantreibbares Entgratwerkzeug 200 gemäß einer dritten Ausführungsform zum Entgraten parallel verlaufender Kanten an einer Ober- und Unterseite eines Werkstücks W dargestellt.

Die dritte Ausführungsform unterscheidet sich von der ersten Ausführungsform dadurch, dass das Entgratwerkzeug 200 zusätzlich eine Auslenkungsbegrenzungseinrichtung 201 aufweist, die die maximale radiale Auslenkung der drehzahl-adaptiven Längenendabschnitte LE der Entgratfäden F begrenzt.

In der in Fig. 3 gezeigten Ausführungsform weist die Auslenkungsbegrenzungseinrichtung 201 zwei Stützhülsen 202, 203 auf, die jeweils einer der Haltebuchsen 14, 15 zugeordnet sind und die Längenendabschnitte LE der von den Haltebuchsen 14, 15 auskragenden Entgratfäden F mit seitlichem Spiel aufnehmen. Die Stützhülsen 202, 203 sitzen jeweils auf einer zugeordneten Haltebuchse 14, 15 und fassen die Entgratfäden F ringartig ein, wodurch sie deren Auslenkung begrenzen.

Die Stützhülsen 202, 203 sind entlang bzw. relativ zur zugeordneten Haltebuchse 14, 15 verschiebbar, um die maximale Auslenkung der Längenendabschnitte LE der Entgratfäden F zu korrigieren. Die Stützhülsen 202, 203 erweitern sich im Durchmesser in Richtung zur axial gegenüberliegenden Haltebuchse 14, 15 trichterförmig, um den Längenendabschnitten LE der Entgratfäden F Raum für eine Auslenkung radial nach außen zu geben und ein Knicken der radial ausgelenkten Längenendabschitte LE der Entgratfäden F zu verhindern.

### Weitere Ausführungsform

In einer nicht gezeigten weiteren Ausführungsform sind die Merkmale der ersten bis dritten Ausführungsform kombiniert. Das Entgratwerkzeug weist daher zusätzlich zu den Merkmalen der in Fig. 1 gezeigten ersten Ausführungsform den in Fig. 2a, 2b gezeigten Radialanschlag 101 und die in Fig. 3 gezeigte Auslenkungsbegrenzungseinrichtung 201 auf.

## Patentansprüche

1. Drehantreibbares Entgratwerkzeug (10; 100; 200) zum Entgraten parallel verlaufender Kanten (KO, KU) an einer Ober- und Unterseite (OS, US) eines plattenförmigen Werkstücks (W), mit einem sich entlang einer Drehachse (DA) erstreckenden Schaft (11) und einem Entgratkopf (13) mit zwei koaxial, in einem axialen Abstand zueinander auf dem Schaft (11) sitzenden Haltebuchsen (14, 15), die jeweils wenigstens einen Entgratfaden (F) einseitig in der Weise halten, dass ein drehzahl-adaptiv radial auslenkbarer Längenendabschnitt (LE) des Entgratfadens (F) in Richtung der axial beabstandeten Haltebuchse (14, 15) ragt, **dadurch gekennzeichnet, dass**
die Längenendabschnitte (LE) der Entgratfäden (F) von axial gegenüberliegenden Stirnseiten (16, 17) der Haltebuchsen (14, 15) ausgehend aufeinander zu ragen.

2. Entgratwerkzeug (10; 100; 200) nach Anspruch 1, **dadurch gekennzeichnet, dass** sich die Längenendabschnitte (LE) der Entgratfäden (F) in einem Ruhezustand des Entgratwerkzeugs (10; 100; 200) jeweils linear entlang des Schafts (11) erstrecken.

3. Entgratwerkzeug (100) nach Anspruch 1 oder 2, **gekennzeichnet durch** einen am Schaft (11) angeordneten Radialanschlag (101) zur Abstützung des Entgratwerkzeugs (100) am Werkstück (W).

4. Entgratwerkzeug (100) nach Anspruch 3, **dadurch gekennzeichnet, dass** der Radialanschlag (101) eine axial mittig zwischen den Haltebuchsen (14, 15) am Schaft (11) angeordnete Trägereinrichtung (102) mit axialen Durchlässen, durch welche sich die Längenendabschnitte (LE) der Entgratfäden (F) hindurch erstrecken, und eine an der Trägereinrichtung (102) drehbeweglich getragene Anschlaghülse (103) zur Abstützung am Werkstück (W) aufweist.

5. Entgratwerkzeug (100) nach Anspruch 4, **gekennzeichnet durch** ein zwischen der Trägereinrichtung (102) und der Anschlaghülse (103) angeordnetes Wälzlager (WL).

6. Entgratwerkzeug (100) nach Anspruch 4 oder 5, **dadurch gekennzeichnet, dass** die Trägereinrichtung (102) ein auf dem Schaft (11) angeordnetes Nabenteil (104) und ein über Speichen (105) mit dem Nabenteil (104) verbundenes Felgenteil (106) aufweist.

7. Entgratwerkzeug (200) nach einem der vorhergehenden Ansprüche, **gekennzeichnet durch** eine Auslenkungsbegrenzungseinrichtung (201) zum Begrenzen einer maximalen Auslenkung der Längenendabschnitte (LE) der Entgratfäden (F) in einem Drehantriebszustand des Entgratwerkzeugs (200).

8. Entgratwerkzeug (200) nach Anspruch 7, **dadurch gekennzeichnet, dass** die Auslenkungsbegrenzungseinrichtung (201) zwei Stützhülsen (202, 203) aufweist, die jeweils auf einer der Haltebuchse (14, 15) angeordnet sind und die Längenendabschnitte (LE) der Entgratfäden (F) aufnehmen.

9. Entgratwerkzeug (200) nach Anspruch 8, **dadurch gekennzeichnet, dass** die Stützhülsen (202, 203) relativ zu einer jeweiligen Haltebuchse (14, 15) axial verschiebbar ist.

10. Entgratwerkzeug (10; 100; 200) nach einem der vorhergehenden Ansprüche, wobei die Längenendabschnitte (LE) der Entgratfräden (F) eine Länge haben, die 70% bis 90% des Abstands der axial gegenüberliegenden Haltebuchsen (14, 15) zueinander beträgt.

11. Entgratwerkzeug (10; 100; 200) nach einem der vorhergehenden Ansprüche, **dadurch gekennzeichnet, dass** die Längenendabschnitte (LE) aller Entgratfäden (F) dieselbe Länge haben

12. Entgratwerkzeug (10; 100; 200) nach einem der vorhergehenden Ansprüche, **dadurch gekennzeichnet, dass** die axial gegenüberliegenden Haltebuchsen (14, 15) jeweils gleich viele Entgratfäden (F) halten.

13. Entgratwerkzeug (10; 100; 200) nach einem der vorhergehenden Ansprüche, **dadurch gekennzeichnet, dass** die axial gegenüberliegenden Haltebuchsen (14, 15) jeweils wenigstens zwei Entgratfäden (F) halten, die um die Drehachse (DA) gleichmäßig verteilt sind.

14. Entgratwerkzeug (10; 100; 200) nach einem der vorhergehenden Ansprüche, **dadurch gekennzeichnet, dass** die Entgratfäden (F) aus Kunststofffasern, Glasfasern, Metallfasern, Keramikfasern und/oder Kohlenstoffasern gebildet sind.

15. Entgratwerkzeug (10; 100; 200) nach einem der vorhergehenden Ansprüche, **dadurch gekennzeichnet, dass** die zumindest die Längendabschnitte (LE) der Entgratfäden (F) jeweils eine abrasive, vorzugsweise diamantmaterialbesetzte, Faseroberfläche aufweisen.

## Claims

1. A rotationally drivable deburring tool (10; 100; 200) for deburring parallel edges (KO, KU) on an upper and lower side (OS, US) of a plate-shaped workpiece (W), comprising a shank (11) extending along a rotation axis (DA) and a deburring head (13) with two holding sleeves (14, 15) which are seated coaxially on the shank (11) at an axial distance from one another and which each hold at least one deburring filament (F) on one side in such a way that a speed-adaptively radially deflectable length end portion (LE) of the deburring filament (F) protrudes in the direction of the axially spaced holding sleeves (14, 15), **characterized in that** the length end portions (LE) of the deburring filaments (F) protrude towards one another, starting from axially opposite end faces (16, 17) of the holding sleeves (14, 15).

2. The deburring tool (10; 100; 200) according to claim 1, **characterized in that** the length end portions (LE) of the deburring filaments (F) each extend linearly along the shank (11) in a resting state of the deburring tool (10; 100; 200).

3. The deburring tool (100) according to claim 1 or 2, **characterized by** a radial stop (101) arranged on the shank (11) for supporting the deburring tool (100) on the workpiece (W).

4. The deburring tool (100) according to claim 3, **characterized in that** the radial stop (101) comprises a carrier device (102) arranged on the shank (11) axially centrally between the holding sleeves (14, 15) with axial passages through which the length end portions (LE) of the deburring filaments (F) extend, and a stop sleeve (103) rotatably supported on the carrier device (102) for supporting on the workpiece (W).

5. The deburring tool (100) according to claim 4, **characterized by** a rolling bearing (WL) arranged between the carrier device (102) and the stop sleeve (103).

6. The deburring tool (100) according to claim 4 or 5, **characterized in that** the carrier device (102) comprises a hub part (104) arranged on the shank (11) and a rim part (106) connected to the hub part (104) via spokes (105).

7. The deburring tool (200) according to one of the preceding claims, **characterized by** a deflection limiting device (201) for limiting a maximum deflection of the length end portions (LE) of the deburring filaments (F) in a rotationally driven state of the deburring tool (200).

8. The deburring tool (200) according to claim 7, **characterized in that** the deflection limiting device (201) comprises two support sleeves (202, 203), each arranged on one of the holding sleeves (14, 15) and receiving the length end portions (LE) of the deburring filaments (F).

9. The deburring tool (200) according to claim 8, **characterized in that** the support sleeves (202, 203) are axially displaceable relative to a respective holding sleeve (14, 15).

10. The deburring tool (10; 100; 200) according to one of the preceding claims, wherein the length end portions (LE) of the deburring filaments (F) have a length which is 70% to 90% of the distance between the axially opposite holding sleeves (14, 15).

11. The deburring tool (10; 100; 200) according to one of the preceding claims, **characterized in that** the length end portions (LE) of all deburring filaments (F) have the same length.

12. The deburring tool (10; 100; 200) according to one of the preceding claims, **characterized in that** the axially opposite holding sleeves (14, 15) each hold the same number of deburring filaments (F).

13. The deburring tool (10; 100; 200) according to one of the preceding claims, **characterized in that** the axially opposite holding sleeves (14, 15) each hold at least two deburring filaments (F) which are evenly distributed around the rotation axis (DA).

14. The deburring tool (10; 100; 200) according to one of the preceding claims, **characterized in that** the deburring filaments (F) are formed of plastic fibers, glass fibers, metal fibers, ceramic fibers and/or carbon fibers.

15. The deburring tool (10; 100; 200) according to one of the preceding claims, **characterized in that** at least the length portions (LE) of the deburring filaments (F) each have an abrasive, preferably diamond-material-coated, fiber surface.

## Revendications

1. Outil d'ébavurage (10 ; 100 ; 200) pouvant être entraîné en rotation, destiné à l'ébavurage d'arêtes s'étendant parallèlement (KO, KU) au niveau d'une face supérieure et d'une face inférieure (OS, US) d'une pièce en forme de plaque (W), avec une tige (11) s'étendant le long d'un axe de rotation (DA) et une tête d'ébavurage (13) avec deux douilles de retenue (14, 15) logées coaxialement sur la tige (11), à une distance axiale l'une de l'autre, qui retiennent respectivement au moins un fil d'ébavurage (F) par un seul côté, de telle sorte qu'une portion d'extrémité longitudinale (LE) du fil d'ébavurage (F), pouvant être déviée radialement en fonction de la vitesse de rotation, fasse saillie en direction de la douille de retenue (14, 15) axialement espacée, **caractérisé en ce que**
les portions d'extrémité longitudinales (LE) des fils d'ébavurage (F) font saillie l'une vers l'autre à partir de faces avant (16, 17) des douilles de retenue (14, 15) axialement opposées.

2. Outil d'ébavurage (10 ; 100 ; 200) selon la revendication 1, **caractérisé en ce que** les portions d'extrémité longitudinales (LE) des fils d'ébavurage (F) s'étendent respectivement linéairement le long de la tige (11) lorsque l'outil d'ébavurage (10 ; 100 ; 200) est à l'état de repos.

3. Outil d'ébavurage (100) selon la revendication 1 ou 2, **caractérisé par** une butée radiale (101) agencée au niveau de la tige (11) pour appuyer l'outil d'ébavurage (100) contre la pièce (W).

4. Outil d'ébavurage (100) selon la revendication 3, **caractérisé en ce que** la butée radiale (101) présente un dispositif support (102) agencé au niveau de la tige (11) axialement au milieu entre les douilles de retenue (14, 15) avec des passages axiaux à travers lesquels s'étendent les portions d'extrémité longitudinales (LE) des fils d'ébavurage (F), ainsi qu'une douille de butée (103) portée de manière rotative par le dispositif support (102) pour appuyer contre la pièce (W).

5. Outil d'ébavurage (100) selon la revendication 4, **caractérisé par** un palier à roulement (WL) agencé entre le dispositif support (102) et la douille de butée (103).

6. Outil d'ébavurage (100) selon la revendication 4 ou 5, **caractérisé en ce que** le dispositif support (102) présente une partie moyeu (104) agencée sur la tige (11) et une partie jante (106) reliée à la partie moyeu (104) par des rayons (105).

7. Outil d'ébavurage (200) selon l'une quelconque des revendications précédentes, **caractérisé par** un dispositif de limitation de déviation (201) destiné à limiter une déviation maximale des portions d'extrémité longitudinales (LE) des fils d'ébavurage (F) lorsque l'outil d'ébavurage (200) est à l'état entraîné en rotation.

8. Outil d'ébavurage (200) selon la revendication 7, **caractérisé en ce que** le dispositif de limitation de déviation (201) présente deux manchons de support (202, 203) qui sont disposés respectivement sur l'une des douilles de retenue (14, 15) et qui reçoivent les portions d'extrémité longitudinales (LE) des fils d'ébavurage (F).

9. Outil d'ébavurage (200) selon la revendication 8, **caractérisé en ce que** les manchons de support (202, 203) sont coulissants axialement par rapport à une douille de retenue (14, 15) respective.

10. Outil d'ébavurage (10 ; 100 ; 200) selon l'une quelconque des revendications précédentes, dans lequel les portions d'extrémité longitudinales (LE) des fils d'ébavurage (F) présentent une longueur qui représente 70 % à 90 % de la distance séparant les douilles de retenue (14, 15) axialement opposées.

11. Outil d'ébavurage (10 ; 100 ; 200) selon l'une quelconque des revendications précédentes, **caractérisé en ce que** les portions d'extrémité longitudinales (LE) de tous les fils d'ébavurage (F) présentent la même longueur

12. Outil d'ébavurage (10 ; 100 ; 200) selon l'une quelconque des revendications précédentes, **caractérisé en ce que** les douilles de retenue (14, 15) axialement opposées retiennent respectivement le même nombre de fils d'ébavurage (F).

13. Outil d'ébavurage (10 ; 100 ; 200) selon l'une quelconque des revendications précédentes, **caractérisé en ce que** les douilles de retenue (14, 15) axialement opposées retiennent respectivement au moins deux fils d'ébavurage (F) qui sont répartis uniformément autour de l'axe de rotation (DA).

14. Outil d'ébavurage (10 ; 100 ; 200) selon l'une quelconque des revendications précédentes, **caractérisé en ce que** les fils d'ébavurage (F) sont formés de fibres plastiques, fibres de verre, fibres métalliques, fibres céramiques et/ou fibres de carbone.

15. Outil d'ébavurage (10 ; 100 ; 200) selon l'une quelconque des revendications précédentes, **caractérisé en ce que** les au moins portions d'extrémité longitudinales (LE) des fils d'ébavurage (F) présentent respectivement une surface de fibre abrasive, de préférence garnie de matériau diamanté.
